**Europäisches Patentamt**

**European Patent Office**

**Office européen des brevets**

(19)

(11) Veröffentlichungsnummer : **0 149 801**
**B1**

(12) # EUROPÄISCHE PATENTSCHRIFT

(45) Veröffentlichungstag der Patentschrift :
29.07.87

(21) Anmeldenummer : 84115515.3

(22) Anmeldetag : 15.12.84

(51) Int. Cl.⁴ : **B 60 T 8/60**, B 60 T 8/18

(54) **Verfahren zur Ermittlung des Sollbremsmoments für die verschiedenen Räder eines Fahrzeugs.**

(30) Priorität : 16.12.83 DE 3345545

(43) Veröffentlichungstag der Anmeldung :
31.07.85 Patentblatt 85/31

(45) Bekanntmachung des Hinweises auf die Patenterteilung : 29.07.87 Patentblatt 87/31

(84) Benannte Vertragsstaaten :
DE FR GB IT SE

(56) Entgegenhaltungen :
EP-A- 0 147 754
GB-A- 1 018 548
GB-A- 2 004 011
US-A- 3 520 575
US-A- 3 702 714
IEEE TRANSACTIONS ON COMMUNICATION TECHNOLOGY, Band COM-19, Nr. 6, Dezember 1971, Seiten 1137-1141; R.E. LAWRENCE u.a.: "The Kalman filter for the equalization of a digital communications channel"

(73) Patentinhaber : ROBERT BOSCH GMBH
Postfach 50
D-7000 Stuttgart 1 (DE)

(72) Erfinder : van Zanten, Anton. Dr.-Ing.
Waldstrasse 15/2
D-7257 Ditzingen 1. (DE)
Erfinder : Heess, Gerhard. Dr.-Ing.
Stuttgarter Strasse 90
D-7146 Tamm (DE)
Erfinder : Geering, Hans Peter, Prof. Dr.-Ing.
Wallrutistrasse 66
CH-8404 Winterthur (CH)

(74) Vertreter : Kammer, Arno, Dipl.-Ing.
ROBERT BOSCH GmbH Zentralabteilung Patente Postfach 50
D-7000 Stuttgart 1 (DE)

EP 0 149 801 B1

**Beschreibung**

Die Erfindung betrifft ein Verfahren zur Ermittlung des Sollbremsmoments mit den Merkmalen des Oberbegriffs des Anspruchs 1.

Es ist bekannt, daß ein Kraftfahrzeugreifen nur in den seltensten Fällen die größte Bremskraft beim Blockieren erreicht. Es gilt in der Regel, daß die maximale Bremskraft übertragen wird, wenn die Drehgeschwindigkeit des Rads knapp unterhalb der eines ungebremsten Rads liegt. Die Anti-Blockier-Systeme (ABS) sind so ausgelegt, daß die Drehgeschwindigkeit des Rads in der Nähe dieses Optimums gehalten wird.

Um die Radgeschwindigkeit in der Nähe vom Optimum zu halten, wird die Radgeschwindigkeit fortwährend gemessen und die Radbeschleunigung berechnet. Aus diesen beiden Zustandsgrößen wird ein Algorithmus für die Bestimmung des Optimums abgeleitet. Die beiden Zustandsgrößen, Radgeschwindigkeit und Radbeschleunigung, beschreiben das Radverhalten. Bei der ABS-Bremsung bestimmt das Radverhalten also den Regelablauf.

Für eine gute ABS-Funktion soll das Radverhalten so gut wie nur möglich bekannt sein. Wenn die Radgeschwindigkeit fehlerfrei gemessen werden könnte, wäre es möglich, das Radverhalten exakt zu bestimmen. Solche Meßverfahren sind jedoch zumindest sehr teuer. Störungen in der Kraftübertragung zwischen Reifen und Fahrbahn oder im Bremssystem können einen störenden Einfluß auf die Regelung ausüben. Solche Störungen können aufgrund von physikalischen Überlegungen durch Einführung von Schwellwerten abgeschwächt werden.

Bei dem erfindungsgemäßen Einsatz eines Kalman Filters gemäß den Merkmalen des Anspruchs 1 werden die Streuungen in den Meß- und Regelgrößen abgeschätzt. Weiter wird mit einer mathematischen Beschreibung der Regelstrecke (z. B. des Rads) der Zustand des Rades vorausberechnet und das Ergebnis mit dem (verrauschten) Meßsignal verglichen. Mit der Differenz wird die Berechnung korrigiert. Da die mathematische Beschreibung der Regelstrecke die physikalischen Gesetze enthält, sind zusätzliche physikalische Überlegungen nicht mehr notwendig.

Es wird hier unterstellt, daß die Signale für die Radgeschwindigkeiten und die Fahrzeuggeschwindigkeit zur verfügung stehen, wobei offen bleibt, wie diese gewonnen werden und ob diese schon eine Filterung erfahren haben.

In der vorliegenden Erfindung wird das Kalman Filter nicht nur zur Ausfilterung von Meßfehler, sondern auch zur Abschätzung von unbekannten Größen wie z. B. der einzelnen Bremskräfte benutzt. Aus der Fahrzeug- und Radgeschwindigkeit wird der Reifenschlupf abgeleitet. Dieser Schlupf wird mit einem vorgeschriebenen Schlupf verglichen und die Differenz wird dem Bremsdruckregler zugeführt. Der Bremsdruckregler ist so ausgelegt, daß der Reifenschlupf möglichst nahe am Sollschlupf liegt.

Der Sollschlupf kann dabei fest eingestellt oder variabel sein und dann unter Zuhilfenahme der Fahrzeuggeschwindigkeit und der Fahrbahnbeschaffenheit berechnet werden. Ziel der Festlegung des Sollschlupfes könnte es sein, den mittleren Reifenschlupf dort hin zu legen, wo die Bremskraft maximal ist. Da sich das Maximum der Schlupfkurve mit der Fahrzeuggeschwindigkeit ändert, führt eine Anpassung des Sollschlupfes an der Fahrzeuggeschwindigkeit zu kürzeren Bremswegen. Ähnliches gilt für die Fahrbahnbeschaffenheit. Es ist aber bekannt, daß die Seitenführungskraft mit steigendem Reifenschlupf abnimmt. Zur Verbesserung der Seitenführung des Fahrzeugs sollte der Sollschlupf kleiner gewählt werden als der Schlupf, bei dem die Bremskraft maximal ist. Bei asymmetrischer Fahrbahn ist der Einfluß dieser Sollschlupfverringerung zweifach. Erstens kann man dadurch das Giermoment verringern und zweitens werden die Führungskräfte vergrößert.

Die erfindungsgemäße Regelung des Bremsmomentes stelle eine Schlupfregelung dar. Für die Steuerung des Bremsmomentes werden später verschiedene Regler vorgeschlagen. Einer der Regler, ein Mehrschrittregler, berücksichtigt dabei auch die dynamischen Gesetze des Rades. Der Mehrschrittregler steuert das Bremsmoment derart, daß der Reifenschlupf in einem oder in mehreren Schritten in etwa den Sollschlupf erreicht.

Anhand der Zeichnung werden Ausführungsbeispiele der Erfindung erläutert. Es zeigen

Figur 1 ein Blockschaltbild eines erfindungsgemäß ausgebildeten Antiblockierregelsystems,

Figuren 2-4 verschiedene Ausbildungen des Reglers.

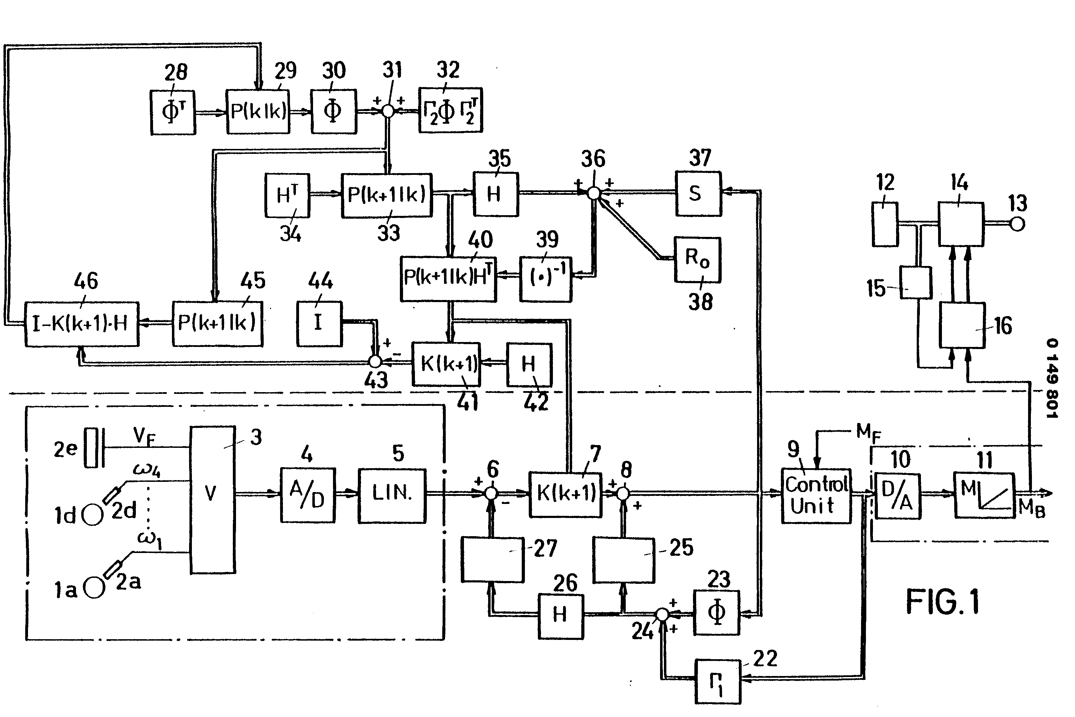

Der Schlupfregler der Fig. 1 arbeitet weitgehend digital. Ebenso könnte der Regler auch analog aufgebaut sein. Anstelle der hier dargestellten diskreten Bauweise kann auch ein Mikrorechner verwendet werden.

Der Index k in den Blöcken ist ein Zeitzähler. Der Zeitzähler wird nach jedem Zyklus im Algorithmus um eins erhöht. Das Blockdiagramm ist durch eine waagerechte gestrichelte Linie in zwei logische Teile unterteilt. Oberhalb der gestrichelten Linie wird der Verstärkungsmatrix K (k + 1) des Kalman Filters berechnet. Unterhalb der gestrichelten Linie wird das erforderliche Bremsmoment ermittelt. Einfach gezeichnete Verbindungen stellen Einfachverbindungen dar, während die doppelt gezeichneten Verbindungslinien elektrische Mehrfachverbindungen bedeuten.

Links unten in Fig. 1 sind die Sensoren für die Radgeschwindigkeiten 1a/2a-1d/2d und der Sensor für die Fahrzeuggeschwindigkeit 2e schematisch dargestellt. Die Sensorsignale werden in einem Verstärker 3 verstärkt und in einem Wandler 4 digitalisiert. In einem Block 5 werden die digitalisierten Sensorsignale linearisiert, sodaß die Signale z (k + 1) am Ausgang des Blocks 5 proportional der Radgeschwindigkeiten bzw. proportional der Fahrzeuggeschwindigkeit sind. Von diesen Sensorsignalen werden in einem Subtrahierer die geschätzten Signale ẑ (k + 1) am Ausgang eines Speichers 27 abgezogen. Die entstehende Differenz, z̃ (k + 1) stellt eine Abschätzung des Meßfehlers dar und wird in einem Verstärker 7 mit der variablen Kalman-Verstärkungsmatrix, K (k + 1), multipliziert. Die verstärkte Differenz am Ausgang wird nun in einem Addierer 8 zum vorausgesagten Zustandsvektor, x̂ (k + 1), der im Speicher 25 gespeichert ist, addiert. Die Summe ist der neu gefilterte Zustandsvektor, x̂ (k + 1/k + 1), welcher sowohl die Rad- und Fahrzeuggeschwindigkeiten als auch die momentanen Bremskräfte enthält.

Der gefilterte Zustandsvektor, x̂ (k + 1/k + 1) wird einem Regler 9 zugeführt. Im Regler 9 werden die erforderlichen Werte der Bremsmomente nach einem Regelalgorithmus für jedes Rad ermittelt. Diese Werte werden mit den vom Fahrer vorgegebenen Bremsmomenten für die Räder, $MF_i$, verglichen (der Index i ist die Radnummer). Wegen der Bremsabstimmung für die Bremsen an verschiedenen Achsen gibt der Fahren im allgemeinen zwei Bremsmomente vor. Der Regler wählt den kleineren Wert aus dem für das Rad errechneten Wert und dem vorgegebenen Wert $MF_i$ aus. Dieser Wert wird für jedes Rad in einem D/A-Wandler 10 in Analogsignale umgewandelt und einem Bremsdruckregler 11 zugeführt. An dessen Ausgang stehen Signale für die Bremsdrücke an, mit denen die einzelnen Räder gebremst werden sollen.

In Fig. 1 ist ein möglicher Regelkreis für die Einsteuerung des notwendigen Bremsdrucks an einer Radbremse 12 angedeutet. Eine Druckquelle ist dort mit 13 bezeichnet, eine Ventileinrichtung mit 14 und ein Druckmesser mit 15. Das Ist-Signal des Druckmessers 15 wird in einem Vergleichsglied 16 mit dem Soll-Signal am Ausgang des Bremsdruckreglers verglichen. Weicht das Ist-Signal in der einen oder anderen Richtung vom Soll-Signal ab, so gibt der Vergleicher auf einer seiner Leitungen ein Steuersignal für das Ventil 14 ab und dieses wird solange in eine Druckaufbau- oder Druckabsenkstellung gesteuert, bis der Ist-Druck angeglichen ist.

Die Signale am Ausgang des Reglers 9 werden in einem Block 22 mit der Matrix $\Gamma_1$ multipliziert und zum Ausgang eines Blocks 23 addiert. Die Summe ist eine Voraussage des Zustandsvektors im nächsten Rechen-Zyklus, x̂ (k + 2/k + 1). Dieser Zustandsvektor wird in einem Speicher 25 für den nächsten Zyklus gespeichert. Weiter wird der vorausgesagte Zustandsvektor, x̂ (k + 2/k + 1) in einem Block 26 mit einer Matrix H multipliziert, sodaß am Ausgang des Blocks 26 der vorausgesagte Meßvektor ẑ (k + 2) ansteht. Dieser vorausgesagte Meßvektor wird im Speicher 27 für den nächsten Zyklus gespeichert. Am Ausgang eines Blocks 23 steht ein Vektor an, welcher das Produkt der Transitionsmatrix φ und des neuen gefilterten Zustandsvektors x̂ (k + 1/k + 1) ist. Nun wird der Algorithmus-Zyklusindex k um eins inkrementiert und die Berechnungen oberhalb der gestrichelten Linie durchgeführt.

Für die Berechnung der neuen Kalman-Verstärkungsmatrix wird (in 29) die transponierte Transitionsmatrix $\varphi^T$ mit der Kovarianzmatrix des Zustandsvektors P (k/k) multipliziert. Das Produkt wird in einem Block 30 nochmals mit der Transitionsmatrix φ multipliziert und das Ergebnis zur konstanten Matrix $\Gamma_2 Q_2^T$ aus Block 32 im Addierer 31 addiert. Die Summe, eine Voraussage der neuen Kovarianzmatrix P (K + 1/k), wird in Speichern 33 und 45 gespeichert.

Die in einem Block 34 gespeicherte Meßmatrix $H^T$ wird nun in einem Block 33 mit der Kovarianzmatrix P (k + 1/k) multipliziert und das Ergebnis in einem Speicher 40 eingespeichert. Außerdem wird das Ergebnis im Block 35 mit dem Meßvektor H multipliziert. In einem Block 37 wird der Zustand x (k/k) mit der Matrix S multipliziert und das Produkt zusammen mit der konstanten Matrix $R_0$ (aus 38) in einem Addierer 36 zum Ausgang des Blocks 35 addiert. Die Summe wird anschließend invertiert (Block 39).

Die invertierte Summe wird dann in einem block 40 mit der Matrix P (k + 1/K) $H^T$.multipliziert und das Ergebnis K (k + 1), die Kalman-Verstärkungsmatrix, im Speicher 41 gespeichert. Block 37 wird gebraucht, um die Änderung der Zustandsstörungen in Abhängigkeit vom Zustand zu berechnen.

Der Matrix K (k + 1) wird nun sowohl für die Berechnung der Kovarianzmatrix P (k/k) im neuen Berechnungszyklus, als auch für die Zustandsabschätzung x̂ (k + 1/k + 1) benutzt. Für die Berechnung der neuen Kovarianzmatrix P (k/k) wird die Meßmatrix H aus Block 42 mit K (k + 1) in Block 41 multipliziert. Das Produkt wird in einem Subtrahierer 43 von der Einheitsmatrix I (44) abgezogen. Die Differenz wird in einem Speicher 46 gespeichert. Danach wird die Voraussage der Kovarianzmatrix P (k + 1/k) aus dem Speicher 45 im Block 46 mit der Differenz multipliziert und das Ergebnis, der neue Kovarianzmatrix P (k + 1/k + 1) in Speicher 29 eingespeichert.

Im folgenden werden drei Möglichkeiten für die Ausbildung des Reglers 9 vorgeschlagen. Jeder Regler bildet für jedes Rad i die Differenz zwischen dem momentanen Reifenschlupf $\lambda_i$ und den optimalen Reifenschlupf $\lambda_{sol}$. Wie in der Einführung bereits beschrieben wurde, ist der optimale Schlupf unter anderem von der Fahrbahnbeschaffenheit (Reibbeiwert) und von der Fahrzeuggeschwindigkeit abhängig. Es werden nur diese zwei Einflußfaktoren berücksichtigt, obwohl im Prinzip natürlich auch andere Faktoren wie z. B. der Schräglauf berücksichtigt werden können.

Am Eingang des Reglers 9 steht der gefilterte Zustand, x̂ (k + 1/k + 1), an. Zur Vereinfachung der Notation wird im folgenden das Hütchen (˙) auf den Variablen weggelassen, obwohl natürlich die gefilterten Variablen gemeint sind, z. B., V̂_F, wo $V_F$ geschrieben steht.

Der Reifenschlupf $\lambda_i$ für das Rad i wird wie üblich definiert

$$\lambda_i = \frac{V_F - VR_i}{V_F}$$

3

wobei

$V_F$ = Fahrzeuggeschwindigkeit

$VR_i$ = Umfangsgeschwindigkeit des Rads i = $\omega_i \cdot R_i$

$\omega_i$ = Drehgeschwindigkeit des Rads i

$R_i$ = Dynamischer Reifenradius des Rads i ist.

Der optimale Schlupf, $\lambda_{soi}$, wird z. B. nach folgender Formel berechnet:

$$\lambda_{soi} = \frac{1 + B_1 \cdot \lambda_{oi} \cdot V_F}{1 + B_1 \cdot V_F}$$

wobei

$V_F$ = Fahrzeuggeschwindigkeit

$B_1$ = konstant (z. B. 1.0)

$\lambda_{oi} = A_1 + A_2 : D_{imax}/FZ_i$

$A_1$ = konstant (z. B. 0.22)

$A_2$ = konstant (z. B. 0.22)

$D_{imax}$ = Maximale Bremskraft des Rads i

$FZ_i$ = Aufstandskraft des Rads i

bedeuten. Der Sollschlupf $\lambda^*_{soi}$ kann der Schlupf des Maximum, der $\mu$-Schlupfkurve sein. Er ist jedoch in der Regel in vorgegebener Weise kleiner als der Schlupf $\lambda_{soi}$ des Maximums.

Die maximalen Bremskräfte werden aus den momentanen Bremskräften berechnet. Der optimale Schlupf wird erst berechnet, wenn die vom Fahrer erwünschten Bremskräfte größer sind als die, welche von der Fahrbahn aufgenommen werden können. Bleiben während der Bremsung die Bremskräfte kleiner, so wird der Bremsmomentenwunsch des Fahrers nicht korrigiert. Erst wenn das übertragbare Bremsmoment überschritten wird, wird eine Bremskorrektur vom Regler veranlaßt. Bei der Beschreibung der Regler wird vorausgesetzt, daß der optimale Schlupf schon einmal überschritten wurde.

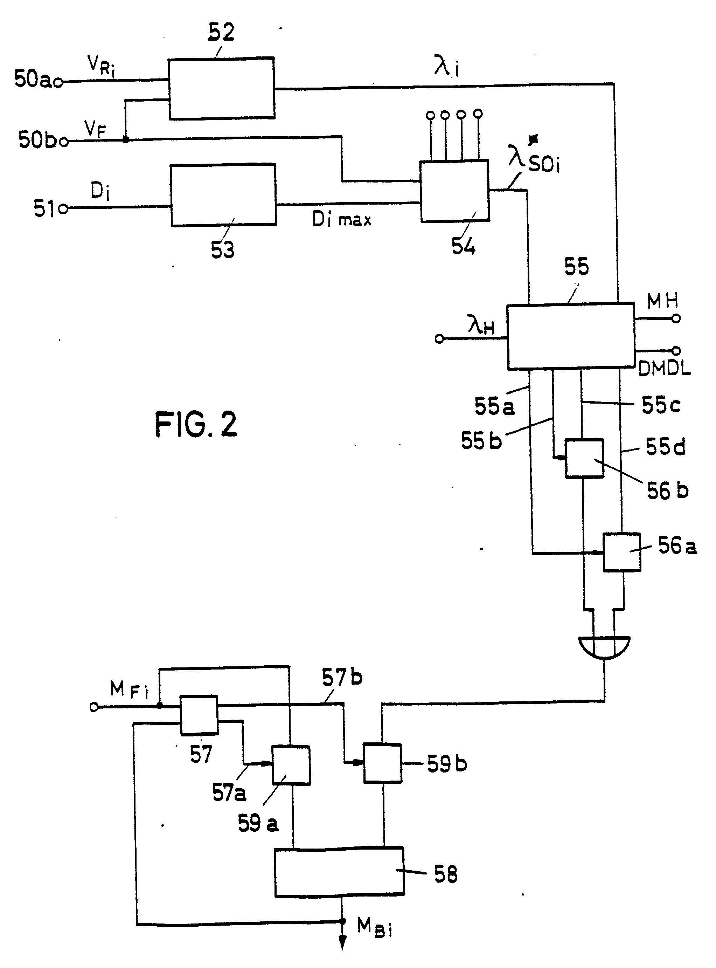

Bei dem Ausführungsbeispiel gemäß Fig. 2 für den Regler 9 wird die Korrektur $\Delta M_i$ des augenblicklichen Bremsmomentes $MB_i$ für das Rad i wie folgt festgelegt:

$$\Delta M_i = 0, \text{ wenn } (\lambda_i - \lambda^*_{soi}) \text{ für } \lambda_i < \lambda_H, \text{ sonst,} \tag{I}$$

$$\Delta M_i = M_H + [\lambda_i - (\lambda^*_{soi} + \lambda_H)] \cdot DMDL, \text{ wenn } \lambda_i > \lambda^*_{soi} + \lambda_H \tag{II}$$

$$\Delta M_i = - M_H + [\lambda_i - (\lambda^*_{soi} - \lambda_H)] \cdot DMDL, \text{ wenn } \lambda_i < \lambda^*_{soi} - \lambda_H \tag{III}$$

wobei

$\lambda_i$ = Reifenschlupf des Rads i

$\lambda_H$ = Halteschlupf (z. B. 0.015)

$M_H$ = Sprung im Bremsmoment nach Haltephase (z. B. 100 nm)

DMDL = Steigung des Bremsmoments über dem Schlupf (z. B. 1 500 Nm) ist.

Diese Korrektur wird vom momentanen Bremsmoment $MB_i$ abgezogen und es entsteht das neue Bremsmoment $MB_i^*$

$$MB_i^* = MB_i - \Delta M_i.$$

Dieses Bremsmoment darf aber nicht das vom Fahrer eingesteuerte Bremsmoment, $MF_i$ für das Rad i, überschreiten. Es gilt deshalb

$$MB_i = MB_i^* \text{ solange } MB_i^* < MF_i$$
$$MB_i = MF_i \text{ wenn } MB_i^* > MF_i \text{ ist.}$$

Der Halteschlupf $\lambda_H$ bewirkt eine Reglerhysterese zur Beruhigung der Regleraktivität.

In Fig. 2 ist ein Ausführungsbeispiel für einen derartigen Regler und zwar nur für ein Rad i dargestellt. Dem Regler werden an den Klemmen 50a, 50b und 51 die Fahrzeuggeschwindigkeit $V_F$, die entsprechende Radgeschwindigkeit $VR_i$ und die momentane Bremskraft $D_i$ des Rads zugeführt. In einem Block 52 wird der Schlupf $\lambda_i$ dieses Rads und im Block 53 aus der Bremskraft $D_i$ die maximale Bremskraft $D_{imax}$ durch Maximumbildung bei Überfahren des Maximums der $\mu$-Schlupfkurve ermittelt. Hieraus und aus dem an den Klemmen 54a-54d zugeführten Konstanten $B_1$, $A_1$, $A_2$ und der variablen Aufstandskraft $FZ_i$ des Rads, die z. B. mittels eines Belastungsgebers ermittelt wird, wird im Block 54 der sollschlupf $\lambda^*_{soi}$ ermittelt. Aus dem augenglicklichen Sollschlupf $\lambda^*_{soi}$ des Rads, dem tatsächlichen Schlupf $\lambda_i$, dem vorgegebenen Halteschlupf $\lambda_H$ und den Konstanten DMDL und MH werden nun in Block 55 die Korrekturen $\Delta M_i$ gemäß den Gleichungen in II und in III ermittelt und außerdem festgestellt, welche der Ungleichungen in II oder in III erfüllt ist. Ist die Ungleichung in II erfüllt, so erscheint ein Signal auf Leitung 55a, das ein Tor 56a für den $\Delta M_i$-Wert gemäß der Gleichung in II

4

durchlässig macht. Im Falle, daß die Ungleichung in III erfüllt ist, wird mittels eines Signals auf Leitung 55b ein Tor 56b durchlässig gemacht, das den $\Delta M_i$-Wert gemäß der Gleichung in III durchläßt.

In einem Vergleicher 57 wird das von Block 58 abgegebene Bremsmoment $MB_i$ mit dem vom Fahrer vorgegebenen Bremsmoment verglichen. Ist das vom Fahrer vorgegebene Bremsmoment $MF_i$ kleiner als das augenglickliche Bremsmoment $MB_i$, so wird über die Leitung 57a ein Tor 59a geöffnet: Damit bestimmt das vom Fahrer vorgegebene Bremsmoment $MF_i$ das augenblickliche Bremsmoment.

Andererseits gibt der Vergleicher 57 ein Signal auf Leitung 57b ab und macht ein Tor 59b für den $\Delta M_i$-Wert durchlässig, wenn das augenblickliche Bremsmoment $MB_i$ kleiner als das vom Fahrer vorgegebene Bremsmoment $MF_i$ ist. Damit wird das augenblickliche Bremsmoment $MB_i$ um $\Delta M_i$ in die eine oder andere Richtung korrigiert.

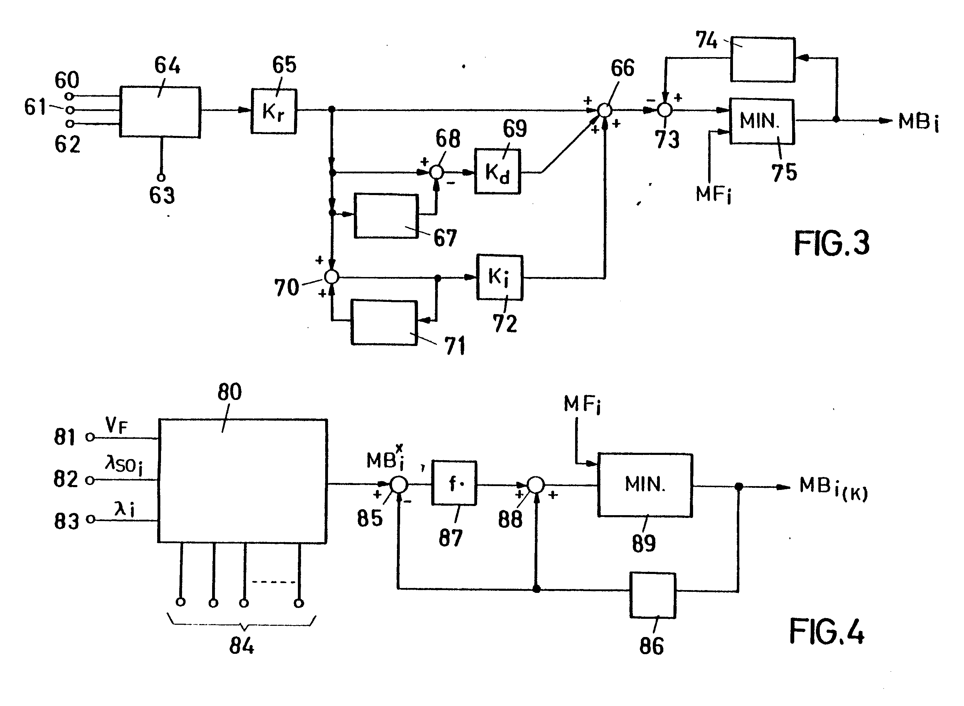

Bei der in Fig. 3 dargestellten Alternative für den Regler 9 ist die Regelgröße eine etwas anders definierte Abweichung vom Sollschlupf und wie folgt definiert:

$$\delta_i^* = \frac{V_F - \lambda_{soi}^* \cdot V_F - VR_i}{V_F - a}$$

wobei

$V_F$ = Fahrzeuggeschwindigkeit
$\lambda_{soi}^*$ = Soll-Reifenschlupf für das Rad i
$VR_i$ = Umfangsgeschwindigkeit des Rads i
$a$ = konstant (z. B. 0.1)

ist.

Die Konstante a soll verhindern, daß der Nenner Null wird, wenn $V_F$ Null ist.

Die Bremskorrektur ist hier:

$$\Delta M_i(k+1) = K_r \cdot \left[ \delta_i^*(k+1) + K_d \cdot (\delta_i^*(k+1) - \delta_i^*(k)) + K_i \cdot \sum_{j=0}^{K-1} \delta_i^*(j) \right]$$

wobei $K_r$, $K_d$, $K_i$ konstant sind.

Der erste Term auf der rechten Seite dieser Gleichung ist der Proportionalteil, während der zweite Term der Differentialteil und der dritte Term der Integralteil ist. Wie beim Regler der Fig. 2 wird diese Korrektur vom momentanen Bremsmoment $MB_i$ abgezogen:

$$MB_i^* = MB_i - \Delta M_i(k+1).$$

Auch hier gilt wie beim Regler der Fig. 2, daß $MB_i^*$ nicht größer werden kann, als das vom Fahrer angesteuerte Bremsmoment $MF_i$ für das Rad i.

Ein Blockschaltbild dieses PID-Reglers ist in Fig. 3 gezeigt. Aus den über Leitungen 60-62 zugeführten Größen $V_F$, $\lambda_{soi}^*$ und $VR_i$, sowie der über eine Klemme 63 zugeführten Konstanten a wird in einem Block 64 $\delta^*$ gebildet, das in einem Block 65 mit der Konstanten $K_r$ multipliziert wird. In einem Addierer 66 wird die Summe gemäß Gleichung IV gebildet, wobei mittels des Zweigs mit einem Speicher 67, einem Subtrahierer 68 und einem Multiplizierer 69 der zweite Ausdruck der eckigen Klammer der Gleichung IV und im Zweig mit einem Summierglied 70, einem Speicher 71 und einem Multiplizierer 72 der letzte Term der Gleichung IV gebildet wird. Das Sumensignal $\Delta M_i(k+1)$ wird mittels eines Subtrahierers 73 von im Vorzyklus ermittelten Bremsmoment $MB_i$ (im Speicher 74) abgezogen, wodurch man das neue Bremsmoment $MB_i^*$ erhält.

Ein das Minimum zwischen $MB_i^*$ und $MF_i$ auswählender Block 75 bestimmt nun das neue Bremsmoment $MB_i^*$.

In einem weiteren Regler wird das erforderliche Bremsmoment berechnet mit der Zwischenformel:

$$MB_i^* = \frac{\left( D_i \cdot C_i^{\frac{KAF_i}{V_F}} - D_{i\,soll} \right) R_i}{C_i^{\frac{KAF_i}{V_F}} - 1} \quad , \quad \text{wenn} \quad \lambda_i > 0 \tag{V}$$

wobei

$$KAF_i = \frac{-D_i}{\lambda_{soi}^* - \delta_i} \quad \text{für} \quad \lambda_i \leq \lambda_{soi}. \quad \text{oder}$$

$$KAF_i = \frac{-D_i}{\delta_{i\,max} - \delta_i} \quad \text{für} \quad \lambda_i > \lambda_{soi}$$

$$D_{i\,soll} = \frac{D_i \cdot \lambda_{soi}^*}{\lambda_{soi}^* + \delta_i} \quad \text{für} \quad \lambda_i \leq \lambda_{soi}, \quad \text{oder} \qquad\qquad (VI)$$

$$D_{i\,soll} = \frac{D_i \cdot \delta_{i\,max}}{\delta_{i\,max} - \delta_i} \quad \text{für} \quad \lambda_i > \lambda_{soi}$$

$R_i$ = Reifenradius
$C_i$ = konstant
$V_F$ = Fahrzeuggeschwindigkeit
$\delta_{imax}$ = konstant (z. B. 5)
$\delta_i = \lambda_i - \lambda_{soi}^*$

Dieses Bremsmoment wäre annäherungsweise erforderlich, um den Radschlupf in einem Algorithmus-Rechenzyklus auf den optimalen Wert zu bringen.

Wenn der Reifenschlupf Null ist, d. h., wenn $\lambda_i = 0$, dann gilt

$$MB_i^* = MF_i$$

wobei $MF_i$ das vom Fahrer angesteuerte Bremsmoment des Rads i ist.

Wegen dem approximativen Charakter des errechneten Bremsmomentes wird vorzugsweise nicht das ganze Moment aufgebracht, sondern nur ein Teil davon.

$$MB_i(k+1) = MB_i(k) + f \cdot (MB_i^* - MB_i(k)) \quad \text{für} \quad MB_i(k+1) < MF_i$$

sonst

$$MB_i(k+1) = MF_i$$

wobei f eine konstante (z. B. 0.5) ist.

In Fig. 4 ist ein Rechner 80 vorgesehen, der aus der Fahrzeuggeschwindigkeit $V_F$, dem optimalen Schlupf und dem Istschlupf (Klemmen 81-83) und den an den Klemmen 84 zugeführten weiteren Größen gemäß Gleichung V unter Berücksichtigung der Zusammenhänge in VI das Soll-Bremsmoment $MB_i^*$ ermittelt. Von diesem wird in einem Subtrahierer 85 das in einem Speicher 86 gespeicherten Bremsmoiment $MB_i(k)$ des Vorzyklus abgezogen ; die Differenz wird dann mit f multipliziert (in 87) und das Produkt zum gespeicherten Wert $MB_i(k)$ addiert (in 88). Auch hier wählt ein Block 89 den kleineren von den Werten $MF_i$ oder $MB_i(k+1)$ als neues Bremsmoment aus.

Anhang I

Definition der Symbole

| | | |
|---|---|---|
| $x_1 = V_F =$ | | Fahrzeuggeschwindigkeit |
| $x_2 = \omega_1 =$ | | Drehgeschwindigkeit von Rad 1 |
| $x_3 = \omega_2 =$ | | Drehgeschwindigkeit von Rad 2 |
| $x_4 = \omega_3 =$ | | Drehgeschwindigkeit von Rad 3 |
| $x_5 = \omega_4 =$ | | Drehgeschwindigkeit von Rad 4 |
| $x_6 = D_1 =$ | | Bremskraft von Reifen 1 |
| $x_7 = D_2 =$ | | Bremskraft von Reifen 2 |
| $x_8 = D_3 =$ | | Bremskraft von Reifen 3 |
| $x_9 = D_4 =$ | | Bremskraft von Reifen 4 |
| $m =$ | | Fahrzeugmasse |
| $I_1 =$ | | Trägheitsmoment von Rad 1 um seine Drehachse |
| $I_2 =$ | | Trägheitsmoment von Rad 2 um seine Drehachse |
| $I_3 =$ | | Trägheitsmoment von Rad 3 um seine Drehachse |
| $I_4 =$ | | Trägheitsmoment von Rad 4 um seine Drehachse |
| $R_1 =$ | | Dynamischer Reifenradius von Rad 1 |
| $R_2 =$ | | Dynamischer Reifenradius von Rad 2 |
| $R_3 =$ | | Dynamischer Reifenradius von Rad 3 |
| $R_4 =$ | | Dynamischer Reifenradius von Rad 4 |

| | |
|---|---|
| $MB_1 =$ | Bremsmoment auf Rad 1 |
| $MB_2 =$ | Bremsmoment auf Rad 2 |
| $MB_3 =$ | Bremsmoment auf Rad 3 |
| $MB_4 =$ | Bremsmoment auf Rad 4 |
| $M_B =$ | Bremsmomentenvektor |
| $n =$ | Rauschpegel in den Bremskräften |
| $b_1 =$ | Rauschverstärkung in $x_6$ |
| $b_2 =$ | Rauschverstärkung in $x_7$ |
| $b_3 =$ | Rauschverstärkung in $x_8$ |
| $b_4 =$ | Rauschverstärkung in $x_9$ |
| $A =$ | Systemmatrix |
| $B_1 =$ | Regelmatrix |
| $B_2 =$ | Störungsmatrix |
| $H =$ | Meßmatrix |
| $z_1 = VF_s =$ | Meßwert Fahrzeuggeschwindigkeit |
| $z_2 = \omega_{1s} =$ | Meßwert Drehgeschwindigkeit Rad 1 |
| $z_3 = \omega_{2s} =$ | Meßwert Drehgeschwindigkeit Rad 2 |
| $z_4 = \omega_{3s} =$ | Meßwert Drehgeschwindigkeit Rad 3 |
| $z_5 = \omega_{4s} =$ | Meßwert Drehgeschwindigkeit Rad 4 |
| $r =$ | Rauschpegel der Messungen |
| $r_1 =$ | Rauschverstärkung in $z_1$ |
| $r_2 =$ | Rauschverstärkung in $z_2$ |
| $r_3 =$ | Rauschverstärkung in $z_3$ |
| $r_4 =$ | Rauschverstärkung in $z_4$ |
| $r_5 =$ | Rauschverstärkung in $z_5$ |
| $R =$ | Verstärkungsmatrix von Zustandsrauschen |
| $\Phi =$ | Transitionsmatrix |
| $\Gamma_1 =$ | Regeltransitionsmatrix |
| $\Gamma_2 =$ | Störungstransitionsmatrix |
| $k =$ | Zeitindex, wird nach jedem Zyklus im Rechenalgorithmus um eins erhöht |
| $P(k/k) =$ | Kovarianzmatrix von Zustand |
| $P(k + 1/k) =$ | Voraussage der Kovarianzmatrix vom Zustand |
| $P_j =$ | Konstante |
| $T =$ | Zykluszeit von Rechenalgorithmus |
| $S =$ | Verstärkungsmatrix vom Meßfehler mit Zustand |
| $R_o =$ | Konstantteil vom Zustandsstörungsmatrix |
| $K(k + 1) =$ | Kalman-Verstärkungsmatrix |
| $Q_{(k)} =$ | Kovarianzmatrix der Störungen in den Bremskräften |
| $q =$ | Konstante |
| $n_t =$ | weißes Rauschen |

Anhang II

Systemgleichung und Definition der Matrizen

Systemgleichung

$$\dot{x}_1 = -(x_6 + x_7 + x_8 + x_9)/m$$

$$\dot{x}_2 = (x_6 \cdot R_1 - M_{B1})/I_1$$

$$\dot{x}_3 = (x_7 \cdot R_2 - M_{B2})/I_2$$

$$\dot{x}_4 = (x_7 \cdot R_3 - M_{B3})/I_3$$

$$\dot{x}_5 = (x_8 \cdot R_4 - M_{B4})/I_4$$

(Fortsetzung)

$$\dot{x}_6 = b_1 \cdot n_\tau$$
$$\dot{x}_7 = b_2 \cdot n_\tau$$
$$\dot{x}_8 = b_3 \cdot n_\tau$$
$$\dot{x}_9 = b_4 \cdot n_\tau$$

Systemgleichung als Vektorgleichung

$$\dot{x} = A\,x + B_1 \cdot M_B + B_2 \cdot n$$

$$A = \begin{pmatrix}
0 & 0 & 0 & 0 & 0 & -\dfrac{1}{m} & -\dfrac{1}{m} & -\dfrac{1}{m} & -\dfrac{1}{m} \\
0 & 0 & 0 & 0 & 0 & \dfrac{R_1}{I_1} & 0 & 0 & 0 \\
0 & 0 & 0 & 0 & 0 & 0 & \dfrac{R_2}{I_2} & 0 & 0 \\
0 & 0 & 0 & 0 & 0 & 0 & 0 & \dfrac{R_3}{I_3} & 0 \\
0 & 0 & 0 & 0 & 0 & 0 & 0 & 0 & \dfrac{R_4}{I_4} \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0
\end{pmatrix}$$

$$B_1 = \begin{pmatrix}
0 & 0 & 0 & 0 \\
-\dfrac{1}{I_1} & 0 & 0 & 0 \\
0 & -\dfrac{1}{I_2} & 0 & 0 \\
0 & 0 & -\dfrac{1}{I_3} & 0 \\
0 & 0 & 0 & -\dfrac{1}{I_4} \\
0 & 0 & 0 & 0 \\
0 & 0 & 0 & 0 \\
0 & 0 & 0 & 0 \\
0 & 0 & 0 & 0
\end{pmatrix}
\qquad
B_2 = \begin{pmatrix}
0 & 0 & 0 & 0 \\
0 & 0 & 0 & 0 \\
0 & 0 & 0 & 0 \\
0 & 0 & 0 & 0 \\
0 & 0 & 0 & 0 \\
b_1 & 0 & 0 & 0 \\
0 & b_2 & 0 & 0 \\
0 & 0 & b_3 & 0 \\
0 & 0 & 0 & b_4
\end{pmatrix}$$

(Fortsetzung)

$$M_B = \begin{vmatrix} M_{B1} \\ M_{B2} \\ M_{B3} \\ M_{B4} \end{vmatrix} \qquad n = \begin{vmatrix} n_t \\ n_t \\ n_t \\ n_t \end{vmatrix}$$

Messgleichung

$$z_1 = x_1 + r_1 \cdot \mu_t$$
$$z_2 = x_2 + r_2 \cdot \mu_t$$
$$z_3 = x_3 + r_3 \cdot \mu_t$$
$$z_4 = x_4 + r_4 \cdot \mu_t$$
$$z_5 = x_5 + r_5 \cdot \mu_t$$

Messgleichung in Vektorform
$$z = H \cdot x + R \cdot \mu$$

$$H = \begin{vmatrix} 1 & 0 & 0 & 0 & 0 & 0 & 0 & 0 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 1 & 0 & 0 & 0 & 0 \end{vmatrix} \qquad R = \begin{vmatrix} r & 0 & 0 & 0 & 0 \\ 0 & r_2 & 0 & 0 & 0 \\ 0 & 0 & r_3 & 0 & 0 \\ 0 & 0 & 0 & r_4 & 0 \\ 0 & 0 & 0 & 0 & r_5 \end{vmatrix}$$

$$r_i = r_{oi} - x_i \cdot s_i \qquad i = 1, ..., 5$$

(Fortsetzung)

$$\phi = \begin{vmatrix} 1 & 0 & 0 & 0 & 0 & \dfrac{-T}{m} & \dfrac{-T}{m} & \dfrac{-T}{m} & \dfrac{-T}{m} \\ 0 & 1 & 0 & 0 & 0 & \dfrac{T \cdot R_1}{I_1} & 0 & 0 & 0 \\ 0 & 0 & 1 & 0 & 0 & 0 & \dfrac{T \cdot R_2}{I_2} & 0 & 0 \\ 0 & 0 & 0 & 1 & 0 & 0 & 0 & \dfrac{T \cdot R_3}{I_3} & 0 \\ 0 & 0 & 0 & 0 & 1 & 0 & 0 & 0 & \dfrac{T \cdot R_4}{I_4} \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 0 & 0 & 0 & 0 & 0 & 0 & 0 & 1 \end{vmatrix}$$

$$\gamma = \begin{vmatrix} \dot{\gamma}\tau \\ \dot{\gamma}\tau \\ \dot{\gamma}\tau \\ \dot{\gamma}\tau \\ \dot{\gamma}\tau \end{vmatrix}$$

$$\Gamma_1 = \begin{vmatrix} 0 & 0 & 0 & 0 \\ \dfrac{-T}{I_1} & 0 & 0 & 0 \\ 0 & \dfrac{-T}{I_2} & 0 & 0 \\ 0 & 0 & \dfrac{-T}{I_3} & 0 \\ 0 & 0 & 0 & \dfrac{-T}{I_4} \\ 0 & 0 & 0 & 0 \\ 0 & 0 & 0 & 0 \\ 0 & 0 & 0 & 0 \\ 0 & 0 & 0 & 0 \end{vmatrix}$$

(Fortsetzung)

$$\Gamma_2 = \begin{vmatrix} \dfrac{-b_1 \cdot T^2}{2m} & \dfrac{-b_2 \cdot T^2}{2m} & \dfrac{-b_3 \cdot T^2}{2m} & \dfrac{-b_4 \cdot T^2}{2m} \\[2ex] \dfrac{b_1 \cdot R_1 \cdot T^2}{2I_1} & 0 & 0 & 0 \\[2ex] 0 & \dfrac{b_2 \cdot R_2 \cdot T^2}{2I_2} & 0 & 0 \\[2ex] 0 & 0 & \dfrac{b_3 \cdot R_3 \cdot T^2}{2I_3} & 0 \\[2ex] 0 & 0 & 0 & \dfrac{b_4 \cdot R_4 \cdot T^2}{2I_4} \\[2ex] b_1 \cdot T & 0 & 0 & 0 \\[1ex] 0 & b_2 \cdot T & 0 & 0 \\[1ex] 0 & 0 & b_3 \cdot T & 0 \\[1ex] 0 & 0 & 0 & b_4 \cdot T \end{vmatrix}$$

$$\check{C} = \check{C}_i \cdot \begin{vmatrix} 1 & 0 & 0 & 0 \\ 0 & 1 & 0 & 0 \\ 0 & 0 & 1 & 0 \\ 0 & 0 & 0 & 1 \end{vmatrix} \qquad R_0 = \begin{vmatrix} r_{o1} & 0 & 0 & 0 & 0 \\ 0 & r_{o2} & 0 & 0 & 0 \\ 0 & 0 & r_{o3} & 0 & 0 \\ 0 & 0 & 0 & r_{o4} & 0 \\ 0 & 0 & 0 & 0 & r_{o5} \end{vmatrix}$$

$$\bar{P}(c/o) = \begin{vmatrix} P1 & 0 & 0 & 0 & 0 & 0 & 0 & 0 & 0 \\ 0 & P2 & 0 & 0 & 0 & 0 & 0 & 0 & 0 \\ 0 & 0 & P3 & 0 & 0 & 0 & 0 & 0 & 0 \\ 0 & 0 & 0 & P4 & 0 & 0 & 0 & 0 & 0 \\ 0 & 0 & 0 & 0 & P5 & 0 & 0 & 0 & 0 \\ 0 & 0 & 0 & 0 & 0 & P6 & 0 & 0 & 0 \\ 0 & 0 & 0 & 0 & 0 & 0 & P7 & 0 & 0 \\ 0 & 0 & 0 & 0 & 0 & 0 & 0 & P8 & 0 \\ 0 & 0 & 0 & 0 & 0 & 0 & 0 & 0 & P9 \end{vmatrix}$$

(Fortsetzung)

$$S = \begin{vmatrix} S_1 & 0 & 0 & 0 & 0 & 0 & 0 & 0 & 0 \\ 0 & S_2 & 0 & 0 & 0 & 0 & 0 & 0 & 0 \\ 0 & 0 & S_3 & 0 & 0 & 0 & 0 & 0 & 0 \\ 0 & 0 & 0 & S_4 & 0 & 0 & 0 & 0 & 0 \\ 0 & 0 & 0 & 0 & S_5 & 0 & 0 & 0 & 0 \end{vmatrix}$$

$$I = \begin{vmatrix} 1 & 0 & 0 & 0 & 0 & 0 & 0 & 0 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 0 & 0 & 0 & 0 & 0 & 0 & 0 & 1 \end{vmatrix}$$

$$
q = b \cdot T^2 \cdot
\begin{bmatrix}
(b_1^2+b_2^2+b_3^2+b_4^2)\cdot\dfrac{T^4}{4m^2} & \dfrac{-b_1^2\cdot R_1\cdot T^4}{4\cdot m\cdot I_1} & \dfrac{-b_2^2\cdot R_2\cdot T^4}{4\cdot m\cdot I_1} & \dfrac{-b_3^2\cdot R_3\cdot T^4}{4\cdot m\cdot I_3} & \dfrac{-b_4^2\cdot R_4\cdot T^4}{4\cdot m\cdot I_4} & \dfrac{-b_1^2\cdot T^3}{2\cdot m} & \dfrac{-b_2^2\cdot T^3}{2\cdot m} & \dfrac{-b_3^2\cdot T^3}{2\cdot m} & \dfrac{-b_4^2\cdot T^3}{2\cdot m} \\[3ex]
\dfrac{-b_1^2\cdot R_1\cdot T^4}{4\cdot m\cdot I_1} & \dfrac{+b_1^2\cdot R_1^2\cdot T^4}{4\cdot I_1^2} & 0 & 0 & 0 & \dfrac{+b_1\cdot R_1\cdot T^3}{2\cdot I_1} & 0 & 0 & 0 \\[3ex]
\dfrac{-b_2^2\cdot R_2\cdot T^4}{4\cdot m\cdot I_2} & 0 & \dfrac{b_2^2\cdot R_2^2\cdot T^4}{4\cdot I_2^2} & 0 & 0 & 0 & \dfrac{+b_2^2\cdot R_2\cdot T^3}{2\cdot I_2} & 0 & 0 \\[3ex]
\dfrac{-b_3^2\cdot R_3\cdot T^4}{4\cdot m\cdot I_3} & 0 & 0 & \dfrac{b_3^2\cdot R_3^2\cdot T^4}{4\cdot I_3^2} & 0 & 0 & 0 & \dfrac{b_3^2\cdot R_3\cdot T^3}{2\cdot I_3} & 0 \\[3ex]
\dfrac{-b_4^2\cdot R_4\cdot T^4}{4\cdot m\cdot I_4} & 0 & 0 & 0 & \dfrac{b_4^2\cdot R_4^2\cdot T^4}{4\cdot I_4^2} & 0 & 0 & 0 & \dfrac{b_4^2\cdot R_4\cdot T^3}{2\cdot I_4} \\[3ex]
\dfrac{-b_1^2\cdot T^3}{2\cdot m} & \dfrac{b_1^2\cdot R_1\cdot T^3}{2\cdot I_1} & 0 & 0 & 0 & b_1^2\cdot T^2 & 0 & 0 & 0 \\[3ex]
\dfrac{-b_2^2\cdot T^3}{2\cdot m} & 0 & \dfrac{b_2^2\cdot R_2\cdot T^3}{2\cdot I_2} & 0 & 0 & 0 & b_2^2\cdot T^2 & 0 & 0 \\[3ex]
\dfrac{-b_3^2\cdot T^3}{2\cdot m} & 0 & 0 & \dfrac{b_3^2\cdot R_3\cdot T^3}{2\cdot I_3} & 0 & 0 & 0 & b_3^2\cdot T^2 & 0 \\[3ex]
\dfrac{-b_4^2\cdot T^3}{2\cdot m} & 0 & 0 & 0 & \dfrac{b_4^2\cdot R_4\cdot T^3}{2\cdot I_4} & 0 & 0 & 0 & b_4^2\cdot T^2
\end{bmatrix}
$$

**0 149 801**

Patentansprüche

1. Verfahren zur Ermittlung eines Sollbremsmomentes für die verschiedenen Räder eines Fahrzeugs unter Verwendung von von den Radgeschwindigkeiten dieser Räder ($V_R$) und der Fahrzeuggeschwindigkeit ($V_c$) abhängigen Eingangsgrößen Z (k + 1) i (i von 2 bis n für die von den Radgeschwindigkeiten und Z (k + 1)$_1$ für die von der Fahrzeuggeschwindigkeit abhängigen Größe), dadurch gekennzeichnet, daß ein Kalman-Filter in der Weise zum Einsatz kommt.

a) daß in vorgegebenen Zeitabständen die Differenz zwischen den Eingangssignalen Z (k + 1), und im Kalman-Filter aufgrund der vorhergehenden Messung ermittelten Simulationswerten $\dot{Z}$ (k + 1), gebildet werden,

b) daß diese Differenzen $\bar{Z}$ (k + 1), jeweils durch Multiplikation mit einem eine Matrix bildenden Kalman-Verstärkungsfaktor K in 2 n + 1 Differenzwerte $\bar{X}$ (k + 1/k + 1), umgewandelt werden,

c) daß jeweils die Summe dieser Differenzwerte $\bar{X}$ (k + 1/k + 1), und entsprechender Simulationswerte $\hat{X}$ (k + 1/k), gebildet werden,

d) daß diese Summenwerte $\hat{X}$(k + 1/k + 1), einem Regler zugeführt werden, der die den Radgeschwindigkeiten und der Fahrzeuggeschwindigkeit entsprechenden Summenwerte in Beziehung setzt und daraus den Bremsmomenten für die Radbremsen entsprechende Signale MB, ermittelt,

e) daß die Summenwerte nach Multiplikation mit einer Transitionsmatrix $\Phi$ und nach Addition zu den mit einer Matrix $\Gamma_1$ multiplizierten Signalen MB, in einem Speicher als Simulationswerte X(k + 2/k + 1) für die folgende Summenbildung abgespeichert werden,

f) und daß außerdem die Simulationswerte $\hat{X}$(k + 2/k + 1) nach Multiplikation mit einer Meßmatrix H als Simulationswert Z(k + 2) für die folgende Messung abgespeichert wird,

wobei die Klammerausdrücke (k + m) bzw. (k + m/k + n) anzeigen, daß die entsprechende Größe im Auswertungstakt (k + m) verwendet wird bzw. in Auswertungstakt (k + m) verwendet wird und im Auswertungstakt (k + n) gewonnen wurde, und wobei T die Zykluszeit, m die Fahrzeugmasse, R, der dynamische Reifenradius und I$_1$ das Trägheitsmoment eines Rads ist.

2. Verfahren nach Anspruch 1, dadurch gekennzeichnet, daß die Kalman-Verstärkungsfaktormatrix K(k + m) jeweils gemäß folgendem Verfahrensablauf ermittelt wird :

a) Die transponierte Transitionsmatrix $\Phi^T$ wird mit der im Vorzyklus ermittelten Kovarianzmatrix P(k/k) multipliziert und dieses Produkt wird mit der Transitionsmatrix $\Phi$ multipliziert.

b) Dieses Produkt wird zu einer konstanten Matrix $\Gamma_2 \cdot Q \cdot \Gamma_2 T$ addiert, um eine Voraussage für die neue Kovarianzmatrix P(k + 1/k) zu erhalten.

c) Nach Multiplikation dieser Voraussage mit der transponierten Meßmatrix $H^T$ wird das Ergebnis P(k + 1/k) $\cdot H^T$ einmal eingespeichert und zum anderen nochmals mit der Meßmatrix H zu einem Ergebnis E$_1$ multipliziert.

d) Es werden die Eingangswerte des Reglers mit einer Matrix S multipliziert und dieses Produkt zu einer konstanten Matrix R$_0$ und zu dem Ergebnis E$_1$ addiert, woraus sich das Ergebnis E$_2$ ergibt.

e) Nach Inversion dieses Ergebnisses E$_2$ (1/E$_2$) wird das gespeicherte Ergebnis P(k + 1/k) $\cdot H^T$ damit multipliziert, wodurch sich die Kalman-Verstärkungsmatrix K(k + 1) ergibt.

f) Diese wird mit dem Meßvektor H multipliziert und das Ergebnis von einer Einheitsmatrix I abgezogen.

g) Diese Differenz I — K(k + 1) $\cdot$ H wird mit der bereits ermittelten Voraussage für die neue Kovarianzmatrix P(k + 1/k) multipliziert, wodurch sich die neue Kovarianzmatrix P(k + 1/k + 1) für die Berechnung der Kalman Verstärkungsmatrix K(k + 2) für den nächsten Zyklus ergibt.

3. Verfahren nach einem der Ansprüche 1 oder 2, dadurch gekennzeichnet, daß im Regler nach Maßgabe der Formel

$$\lambda_{soi} = \frac{1 - B_1 \cdot \lambda_{soi} \cdot V_F}{1 - B_1 \cdot V_F}$$

für jedes Rad i ein dem augenblicklich optimalen Schlupf entsprechendes Signal $\lambda_{soi}$ ermittelt wird und daß mit diesem optimalen Schlupfsignal $\lambda_{soi}$ und dem augenblicklichen Schlupfsignal $\lambda_i$ jedes Rads für jedes Rad ein Bremsmomentensignal MB$_i$ ermittelt und zur Beeinflussung der Bremse im Sinne einer Angleichung des Radschlupfs $\lambda_i$ an einen Sollschlupf $\lambda^*_{soi} \leq \lambda_{soi}$ verwendet wird, wobei die Größen in der Formel folgendes bedeuten :

V$_F$ = Fahrzeuggeschwindigkeitssignal = ($\hat{X}$(k/k))

B$_1$ = eine Konstante (z. B. 1.0)

$$\lambda_{soi} = \frac{A_1 - A_2 \cdot D_{i\,max}}{FZ_i}$$

A$_1$ = Konstante (z. B. 0.03)

A$_2$ = Konstante (z. B. 0.22)

D$_{imax}$ = Maximale Bremskraft des Rads

FZ$_i$ = Aufstandskraft des Rads i

14

4. Verfahren nach Anspruch 3, dadurch gekennzeichnet, daß eine Korrektur $\Delta M_i$ für das augenblickliche Bremsmoment $MB_i$ nach Maßgabe der Gleichungen

$$\Delta M_i = M_H - (\lambda_i - \lambda_{SOi}^*) \cdot DMDL \quad \text{für} \quad \lambda_i > \lambda_{SOi}^* \tag{A}$$

oder

$$\Delta M_i = - M_H - (\lambda_i - \lambda_{SOi}^*) \cdot DMDL \quad \text{für} \quad \lambda_i < \lambda_{SOi}^* \tag{B}$$

ermittelt wird und daraus nach Maßgabe der Gleichung

$$MBi^* = MBi - \Delta Mi$$

das neue Bremsmoment $MB_i^*$ ermittelt wird, wobei dieses nur wirksam gemacht wird, wenn $MB_i^*$ kleiner als das vom Fharer eingesteuerte Bremsmoment ist, wobei $M_H$ ein kleines konstantes Bremsmoment und DMDL eine vorgegebene Steigung des Bremsmoments über dem Schlupf ist.

5. Verfahren nach Anspruch 4, dadurch gekennzeichnet, daß $\lambda^*_{soi}$ in den Gleichungen und Ungleichungen A und B durch

$$\lambda_{SOi}^* - \lambda_H \quad \text{in A und}$$
$$\lambda_{SOi}^* - \lambda_H \quad \text{in B ersetzt wird, wobei } \lambda_H$$

ein kleiner konstanter Schlupfwert ist.

6. Verfahren nach Anspruch 3, dadurch gekennzeichnet, daß die Abweichung $\delta_i^*$ des Istschlupfs vom Sollschlupf $\lambda^*_{soi}$ nach Maßgabe der Gleichung

$$\delta_i^* = \frac{V_F - \lambda_{SOi}^* \, V_F - VR_i}{V_F - a}$$

und die Bremsmomentkorrektur $\Delta M_i (k + 1)$ nach Maßgabe der Gleichung

$$\begin{aligned}
\Delta M_i(k + 1) = K_r \cdot \Big[ &\delta_i^*(k + 1) \\
&+ K_d \cdot (\delta_i^*(k + 1) - \delta_i^*(k)) \\
&+ K_i \cdot \sum_{j=0}^{K-1} \delta_i^*(j) \Big]
\end{aligned}$$

ermittelt wird, wobei $K_r$, $K_d$ und $K_i$ Konstante sind.

7. Verfahren nach Anspruch 6, dadurch gekennzeichnet, daß das neue Bremsmoment entweder das vom Fahrer eingesteuerte Bremsmoment $MF_i$ oder — wenn dieses kleiner ist — das Bremsmoment

$$MB_i^* = MB_i - \Delta M_i (k + 1)$$

ist (wobei $MB_i$ das vorher ermittelte Bremsmoment ist).

8. Verfahren nach Anspruch 3, dadurch gekennzeichnet, daß das neue Bremsmoment $MB_i^*$ nach Maßgabe der Gleichung :

$$MB_i^* = \frac{\left( D_i \cdot C_i^{\frac{KAF}{V_F}} - D_{soll} \right) \cdot R_i}{C_i^{\frac{KAF}{V_F}} - 1} \quad \text{wenn} \quad \lambda_i > 0$$

ermittelt wird, wobei folgende Bedingungen gelten :

$$KAF = \frac{-D_i}{\lambda_{soi}^* - \delta_i} \quad \text{für} \quad \lambda_i \leq \lambda_{soi}, \quad \text{oder}$$

$$KAF = \frac{-D_i}{\delta_{i\,max} - \delta_i} \quad \text{für} \quad \lambda_i > \lambda_{soi}$$

$$D_{i\,soll} = \frac{D_i \cdot \lambda_{soi}^*}{\lambda_{soi}^* - \delta_i} \quad \text{für} \quad \lambda_i \leq \lambda_{soi}, \quad \text{oder}$$

$$D_{i\,soll} = \frac{D_i \cdot \delta_{i\,max}}{\delta_{i\,max} - \delta_i} \quad \text{für} \quad \lambda_i > \lambda_{so}$$

$R_i$ = Reifenradius

$C_i$ = konstant

$V_F$ = Fahrzeuggeschwindigkeit

$\delta_{imax}$ = konstant (z. B. 5)

$\delta_i = \lambda_i - \lambda^*_{soi}$

9. Verfahren nach Anspruch 8, dadurch gekennzeichnet, daß nur eine abgeschwächte Angleichung des Bremsmoments an den ermittelten Wert $MB_i^*$ erfolgt.

## Claims

1. Process for the determination of a theoretical braking torque for the various wheels of a vehicle with the applications of input quantities $Z(k + 1)$ i dependent upon the wheel speeds of these wheels ($V_R$) and the vehicle speed ($V_F$) (i from 2 to n for the quantity dependent upon the wheel speeds and $Z(k + 1)_1$ for the quantity dependent upon the vehicle speed, characterized in that a Kalman filter is used in such a manner

a) that the difference between the input signals $Z(k + 1)_i$ and simulation values $\hat{Z}(k + 1)_i$ determined in the Kalman filter on the basis of the preceding measurement is formed at prescribed intervals of time.

b) that these differences $\bar{Z}(k + 1)_i$ are converted into two n + 1 difference values $\hat{X}(k + 1/k + 1)_i$ in each instance by multiplication by a Kalman amplification factor K forming a matrix,

c) that the sum of these difference values $\hat{X}(k + 1/k + 1)_i$ and corresponding simulation values $\hat{X}(k + 1/k)_i$ is formed in each instance,

d) that these sum values $\hat{X}(k + 1/k + 1)_i$ are fed to a controller, which interrelates the sum values corresponding to the wheel speeds and to the vehicle speed and determines therefrom signals $MB_i$ corresponding to the braking torques for the wheel brakes,

e) that, after multiplication by a transition matrix $\Phi$ and after addition to the signals $MB_i$ multiplied by a matrix $\Gamma_1$, the sum values are stored in a store as simulation values $X(k + 2/k + 1)$ for the following sum formation.

f) and that, moreover, after multiplication by a measurement matrix H, the simulation values $\hat{X}(k + 2/k + 1)$ are stored as simulation value $Z(k + 2)$ for the following measurement, the bracketed expressions $(k + m)$ and $(k + m/k + n)$ respectively indicating that the corresponding quantity is used in the evaluation cycle $(k + m)$ and is used in the evaluation cycle $(k + m)$ and was obtained in the evaluation cycle $(k + n)$ respectively, and T being the cycle time, m the mass of the vehicle, $R_i$ the dynamic tyre radius and $I_i$ the moment of inertia of a wheel.

2. Process according to Claim 1, characterized in that the Kalman amplification factor matrix $K(k + m)$ is determined in each instance in accordance with the following procedure :

a) The transposed transition matrix $\Phi^T$ is multiplied by the covariance matrix $P(k/k)$ determined in the previous cycle, and this product is multiplied by the transition matrix $\Phi$ ;

b) this product is added to a constant matrix in order to obtain a prediction for the new covariance matrix $P(k + 1/k)$ ;

c) after multiplication of this prediction by the transposed measurement matrix $H^T$, the result $P(k + 1/k) \cdot H^T$ is on the one hand stored and on the other hand multiplied once again by the measurement matrix H to form a result $E_1$ ;

d) the input values of the controller are multiplied by a matrix S, and this product is added to a constant matrix $R_0$ and to the result $E_1$, from which the result $E_2$ is obtained ;

e) after inversion of this result $(1/E_2)$, the stored result $P(k + 1/k) \cdot H^T$ is multiplied therewith, whereby the Kalman amplification matrix $K(k + 1)$ is obtained ;

f) the latter is multiplied by the measurement vector H, and the result is substracted from a unit matrix I ;

g) this difference $I - K(k + 1) \cdot H$ is multiplied by the already determined prediction for the new covariance matrix $P(k + 1/k)$, whereby the new covariance matrix $P(k + 1/k + 1)$ for the computation of the Kalman amplification matrix $K(k + 2)$ for the next cycle is obtained.

3. Process according to one of Claims 1 or 2, characterized in that a signal $\lambda_{soi}$ corresponding to the instantaneously optimal slip is determined for each wheel i in the controller in accordance with the formula

$$\lambda_{soi} = \frac{1 - B_1 \cdot \lambda_{soi} \cdot V_F}{1 - B_1 \cdot V_F}$$

and in that a braking torque signal $MB_i$ is determined for each wheel by this optimal slip signal $\lambda_{soi}$ and the instantaneous slip signal $\lambda_i$ of each wheel and is employed to influence the brake in the sense of a harmonisation of the wheel slip $\lambda_i$ with a theoretical slip $\lambda^*_{soi} < \lambda_{soi}$, the meanings of the quantities in the formula being the following :

$V_F$ = vehicle speed signal = $(\hat{x}(k/k))$

16

$B_i$ = a constant (e. g. 1.0)

$$\lambda_{soi} = \frac{A_1 - A_2 \cdot D_{i\,max}}{FZ_i}$$

$A_1$ = constant (e. g. 0.03)
$A_2$ = constant (e. g. 0.22)
$D_{imax}$ = maximum braking force of the wheel
$FZ_i$ = contact force of the wheel i.

4. Process according to Claim 3, characterized in that a correction $\Delta M_i$ for the instantaneous braking torque $MB_i$ is determined in accordance with the equations

$$\Delta M_i = M_H + (\lambda_i - \lambda_{soi}^*) \cdot DMDL \quad \text{for} \quad \lambda_i > \lambda_{soi}^* \tag{A}$$

or

$$\Delta M = -M_H + (\lambda - \lambda_{soi}^*) \cdot DMDL \quad \text{for} \quad \lambda_i < \lambda_{soi}^* \tag{B}$$

and the new braking torque $MB_i^*$ is determined therefrom in accordance with the equation

$$MB_i^* = MB_i - \Delta M_i$$

the new braking torque being made effective only if $MB_i^*$ is smaller than the braking torque set by the driver, $M_H$ being a small constant braking torque, and DMDL being a prescribed gradient of the braking torque with respect to the slip.

5. Process according to Claim 4, characterized in that $\lambda_{soi}^*$ in the equations and inequalities A and B is replaced by

$$\lambda_{soi}^* + \lambda_H \quad \text{in A and}$$
$$\lambda_{soi}^* - \lambda_H \quad \text{in B}$$

$\lambda_H$ being a small constant slip value.

6. Process according to Claim 3, characterized in that the deviation $\delta_i^*$ of the actual slip from the theoretical slip $\lambda_{soi}^*$ is determined in accordance with the equation

$$\delta_i^* = \frac{V_F - \lambda_{soi}^* V_F - VR_i}{V_F + a}$$

and the braking torque correction $\Delta M_i (k + 1)$ is determined in accordance with the equation

$$\Delta M_i(k + 1) = K_r \cdot \left[ \delta_i^*(k + 1) \right.$$
$$+ K_d \cdot (\delta_i^*(k + 1) - \delta_i^*(k))$$
$$\left. + K_i \cdot \sum_{j=0}^{K-1} \delta_i^*(j) \right]$$

where $K_r$, $K_d$ and $K_i$ are constants.

7. Process according to Claim 6, characterized in that the new braking torque is either the braking torque $MF_i$ set by the driver or — if this is smaller — the braking torque

$$MB_i^* = MB_i - \Delta M_i (k + 1)$$

(where $MB_i$ is the previously determined braking torque).

8. Process according to Claim 3, characterized in that the new braking torque $MB_i^*$ is determined in accordance with the equation :

$$MB_i^* = \frac{\left( D_i \cdot C_i^{\frac{KAF_i}{V_F}} - D_{i\,soll} \right) \cdot R_i}{C_i^{\frac{KAF_i}{V_F}} - 1} \quad , \quad \text{if} \quad \lambda_i > 0$$

the following conditions being applicable :

$$KAF_i = \frac{-D_i}{\lambda^*_{soi} + \delta_i} \quad \text{for} \quad \lambda_i \leq \lambda_{soi}, \quad \text{or}$$

$$KAF_i = \frac{-D_i}{\delta_{i\,max} - \delta_i} \quad \text{for} \quad \lambda_i > \lambda_{soi}$$

$$D_{i\,theor} = \frac{D_i \cdot \lambda^*_{soi}}{\lambda^*_{soi} + \delta_i} \quad \text{for} \quad \lambda_i \leq \lambda_{soi}, \quad \text{or}$$

$$D_{i\,theor} = \frac{D_i \cdot \delta_{i\,max}}{\delta_{i\,max} - \delta_i} \quad \text{for} \quad \lambda_i > \lambda_{soi}$$

$R_i$ = radius of tyre
$C_i$ = constant
$V_F$ = vehicle speed
$\delta_{imax}$ = constant (e. g. 5)
$\delta_i = \lambda_i - \lambda^*_{soi}$

9. Process according to Claim 8, characterized in that only an attenuated harmonisation of the braking torque with the determined value $MB_i^*$ takes place.

## Revendications

1. Procédé pour rechercher le couple de freinage de consigne des différentes roues d'un véhicule, en utilisant des grandeurs d'entrée $Z(k + 1)$ i, dépendantes des vitesses $(V_R)$ de ces roues de la vitesse $(V_F)$ du véhicule (avec i allant de 1 à n pour les grandeurs dépendantes des vitesses des roues, et avec $Z(k + 1)$ 1 pour la grandeur dépendante de la vitesse du véhicule, procédé caractérisé en ce qu'un filtre de Kalman est mis en œuvre de façon que :

a) dans des intervalles de temps prédéfinis, les différences entre les signaux d'entrée $Z(k + 1)$ i et les valeurs de simulation $\hat{Z}(k + 1)$ i déterminés dans le filtre de Kalman sur la base de la mesure précédente soient formées,

b) ces différences $\hat{Z}(k + 1)$ soient respectivement transformées, par multiplication avec un facteur K d'amplification de Kalman formant une matrice, en $2n + 1$ valeurs différentielles $\hat{X}(k + 1/k + 1)$ i,

c) respectivement les sommes de ces valeurs différentielles $\hat{X}(k + 1/k + 1)$i et des valeurs de simulation correspondantes $\hat{X}(k + 1/k)$i soient formées,

d) ces valeurs de totalisation $\hat{X}(k + 1/k + 1)$ i soient appliquées à un régulateur qui met en relation les valeurs de totalisation correspondantes aux vitesses des roues et à la vitesse du véhicule et qui détermine à partir d'elles, les signaux $MB_i$ correspondants aux couples de freinage pour les freins de roues,

e) les valeurs de totalisation, après multiplication avec une matrice de transition $\Phi$ et après addition aux signaux $MB_i$ multipliés par une matrice $r_1$, sont déposées dans une mémoire en tant que valeurs de simulation $X(k + 2/k + 1)$ pour la formation des sommes suivantes,

f) et en outre, les valeurs de simulation $\hat{X}(k + 2/k + 1)$ après multiplication avec une matrice de mesure H, sont mémorisées en temps que valeur de simulation $Z(k + 2)$ pour la mesure suivante, les expressions entre parenthèses $(k + m)$ ou $(k + m/k + n)$ indiquant que la grandeur correspondante est utilisée dans le cycle d'évaluation $(k + m)$ et a été obtenue dans le cycle d'évaluation $(k + n)$, et T étant la durée du cycle, m la masse du véhicule, $R_i$ le rayon dynamique des pneumatiques et $I_i$ le moment d'inertie d'une roue.

2. Procédé selon la revendication 1, caractérisé en ce que la matrice de facteur d'amplification de Kalman $K(k + m)$ est respectivement déterminée selon le processus ci-après :

a) la matrice de transition $\Phi^T$, transposée, est multipliée avec la matrice de covariance $P(k/k)$ déterminée dans le cycle préalable et ce produit est multiplié avec la matrice de transition $\Phi$,

b) ce produit est ajouté à une matrice constante $r_2 \cdot Q \cdot r_2^T$ afin d'obtenir une prédiction pour la nouvelle matrice de covariance $P(k + 1/k)$,

c) après multiplication de cette prédiction avec la matrice de mesure, transposée, $H^T$, le résultat $P(k + 1/k) \cdot H^T$ est d'une part, mémorisé, et, d'autre part, encore une fois multiplié avec la matrice de mesure H pour obtenir un résultat $E_1$,

d) les valeurs d'entrée du régulateur sont multipliées avec une matrice S et ce produit est ajouté à une matrice constante $R_o$ et au résultat $E_1$, ce qui donne le résultat $E_2$,

e) après inversion de ce résultat $E_2$ ($1/E_2$), il est multiplié avec le résultat mémorisé $P(k + 1/k) \cdot H^T$ ce qui donne la matrice d'amplification de Kalman $K(k + 1)$,

f) cette matrice est multipliée par le vecteur de mesure H et le résultat est soustrait d'une matrice d'unité I,

g) cette différence $I - K(k + 1) \cdot H$ est multipliée avec la prédiction déjà déterminée pour la nouvelle matrice de covariance $P(k + 1/k)$, ce qui donne la nouvelle matrice de covariance $P(k + 1/k + 1)$ pour le calcul de la matrice d'amplification de Kalman $K(k + 2)$ pour le cycle suivant.

3. Procédé selon une des revendications 1 ou 2, caractérisé en ce que, dans le régulateur, selon la formule :

18

$$\lambda_{soi} = \frac{1 - B_1 \cdot \lambda_{soi} \cdot V_F}{1 - B_1 \cdot V_F}$$

un signal soi correspondant au glissement optimal instantané est obtenu, et avec ce signal de glissement optimal $\lambda_{soi}$ et le signal de glissement instantané $\lambda_i$ de chaque roue, un signal de couple de freinage $MB_i$ est déterminé et est utilisé pour influencer le frein dans le sens d'un ajustement du glissement $\lambda_i$ de la roue sur un glissement de consigne $\lambda^*_{soi}$ $\lambda_{soi}$, les grandeurs dans la formule ayant les significations suivantes :

$V_F$ = signal de vitesse du véhicule = $(\dot{X} (k/k))$

$B_1$ = une constante (par exemple 1,0)

$$\lambda_{soi} = \frac{A_1 - A_2 \cdot D_{i\,max}}{FZ_i}$$

$A_1$ = constante (par exemple 0,03)

$A_2$ = constante (par exemple 0,22)

$D_{imax}$ = effort maximal de freinage de la roue.

$FZ_i$ = effort de soulèvement de la roue i.

4. Procédé selon la revendication 3, caractérisé en ce qu'une correction $M_i$ est déterminée pour le couple instantané de freinage $MB_i$ selon les égalités :

$$\Delta M_i = M_H + (\lambda_i - \lambda^*_{soi}) \cdot DMDL \quad \text{pour} \quad \lambda_i > \lambda^*_{soi}$$

ou bien

$$\Delta M_i = - M_H + (\lambda_i - \lambda^*_{soi}) \cdot DMDL \quad \text{pour} \quad \lambda_i < \lambda^*_{soi}$$

et qu'à partir de là, selon l'égalité :

$$MB_i^* = MB_i - \Delta M_i$$

le nouveau couple de freinage $MB_i^*$ est inférieur au couple de freinage commandé par le conducteur, $M_H$ étant un faible couple de freinage constant et DMDL un accroissement prédéfini du couple de freinage en fonction du glissement.

5. Procédé selon la revendication 4, caractérisé en ce que $\lambda^*_{soi}$ est remplacé dans les égalités et inégalités A et B par :

$$\lambda^*_{soi} + \lambda_H \quad \text{dans A}$$
$$\lambda^*_{soi} - \lambda_H \quad \text{dans B}$$

H étant une faible valeur constante de glissement.

6. Procédé selon la revendication 3, caractérisé en ce que l'écart $\delta_i^*$ du glissement réel par rapport au glissement de consigne $\lambda^*_{soi}$ est déterminé selon l'égalité :

$$\delta_i^* = \frac{V_F - \lambda^*_{soi}\,V_F - VR_i}{V_F + a}$$

et la correction du couple de freinage $\Delta M_i (k + 1)$ selon l'égalité :

$$\Delta M_i(k + 1) = K_r \cdot \left[ \delta_i^*(k + 1) \right. $$
$$+ K_d \cdot (\delta_i^*(k + 1) - \delta_i^*(k)) $$
$$\left. + K_i \cdot \sum_{j=0}^{k-1} \delta_i^*(j) \right]$$

$K_r$, $K_d$ et $K_i$ étant des constantes.

7. Procédé selon la revendication 6, caractérisé en ce que le nouveau couple de freinage est, soit le couple commandé par le conducteur, ou bien s'il est inférieur, le couple de freinage :

$$MB_i^* = MB_i - \Delta M_i (k + 1)$$

$MB_i$ étant le couple de freinage précédemment déterminé.

8. Procédé selon la revendication 3, caractérisé en ce que le nouveau couple de freinage $MB_i^*$ est déterminé selon l'égalité :

$$MB_i^* = \frac{\left( D_i \cdot C_i^{\frac{KAF_i}{V_F}} - D_{i\,soll} \right) \cdot R_i}{C_i^{\frac{KAF_i}{V_F}} - 1} \quad . \quad \text{quand} \quad \lambda > 0$$

avec les conditions suivantes :

$$KAF_i = \frac{-D_i}{\lambda_{soi}^* + \delta_i} \qquad \text{pour} \quad \lambda_i \leq \lambda_{soi}.$$

$$KAF_i = \frac{-D_i}{\delta_{i\,max} - \delta_i} \qquad \text{pour} \quad \lambda_i > \lambda_{soi}$$

$$D_{i\,soll} = \frac{D_i \cdot \lambda_{soi}^*}{\lambda_{soi}^* + \delta_i} \qquad \text{pour} \quad \lambda_i \leq \lambda_{soi}.$$

$$D_{i\,soll} = \frac{D_i \cdot \delta_{i\,max}}{\delta_{i\,max} - \delta_i} \qquad \text{pour} \quad \lambda_i > \lambda_{soi}$$

avec

$R_i$ = rayon du pneumatique
$C_i$ = constante
$V_F$ = vitesse du véhicule
$\delta_{imax}$ = constante (par exemple 5)
$\delta_i = \lambda_i - \lambda_{soi}^*$

9. Procédé selon la revendication 8, caractérisé en ce qu'il n'en résulte qu'un ajustement atténué du couple de freinage à la valeur $MB_i$ ainsi déterminée.

**FIG.1**

FIG. 2

FIG.3

FIG.4

0 149 801